# EUROPEAN PATENT APPLICATION

(11) **EP 2 849 330 A1**
(43) Date of publication of application: **18.03.2015**
(21) Application number: 13275214.8
(22) Date of filing: 13.09.2013
(51) Int. Cl.: H02M 7/483

(54) **Modular Power Converter and module thereof**

(71) Applicant: ALSTOM Technology Ltd, 5400 Baden (CH)
(72) Inventor: The designation of the inventor has not yet been filed
(74) Representative: Marshall, Caroline

(57) **Abstract**

An electrical device (48) comprises:
first and second device terminals (50,52);
a first module (54) including first and second module terminals (60,62), the first module terminal (60) being connected to the first device terminal (50), the first module (54) further including a pair of first and second switching blocks (64,66) connected in parallel with an energy storage device (70) in a half-bridge arrangement such that the first switching block (64) of the first module (54) is connected in parallel with a connection of the second switching block (66) and energy storage device (70) of the first module (54) between the first and second module terminals (60,62), the first switching block (64) of the first module (54) including an active switching element connected in anti-parallel with a passive current check element, the passive current check element of the first switching block (64) of the first module (54) defining a unidirectional current path from the second module terminal (62) to the first module terminal (60); and
first and second current flow control elements (56,58),
wherein the first module (54) is connected to the second device terminal (52) by way of the second module terminal (62) being connected to the second device terminal (52) via a first current flow control element (56), the first current flow control element (56) including an active switching element that is selectively switchable to a current blocking mode to block current from flowing through the first current flow control element (56) when a current flows from the second device terminal (52) to the first device terminal (54), and
wherein the first module (54) further includes a third module terminal (68) that is defined by a junction between the second switching block (66) and the energy storage device (70) of the first module (54), the first module (54) being further connected to the second device terminal (52) by way of the third module terminal (68) being connected to the second device terminal (52) only through a second current flow control element (58), the second current flow control element (58) being a unidirectional current flow control element that includes a passive current check element to direct a current flowing from the second device terminal (52) to the first device terminal (50) to flow through the third module terminal (68) and energy storage device (70) of the first module (54) when the active switching element of the first current flow control element (56) is switched to the current blocking mode.

## Description

The invention relates to an electrical device and a voltage source converter.

In power transmission networks alternating current (AC) power is typically converted to direct current (DC) power for transmission via overhead lines and/or under-sea cables. This conversion removes the need to compensate for the AC capacitive load effects imposed by the transmission line or cable, and thereby reduces the cost per kilometer of the lines and/or cables. Conversion from AC to DC thus becomes cost-effective when power needs to be transmitted over a long distance.

The conversion of AC power to DC power is also utilized in power transmission networks where it is necessary to interconnect the AC electrical networks operating at different frequencies.

In any such power transmission network, converters are required at each interface between AC and DC power to effect the required conversion, and one such form of converter is a voltage source converter (VSC).

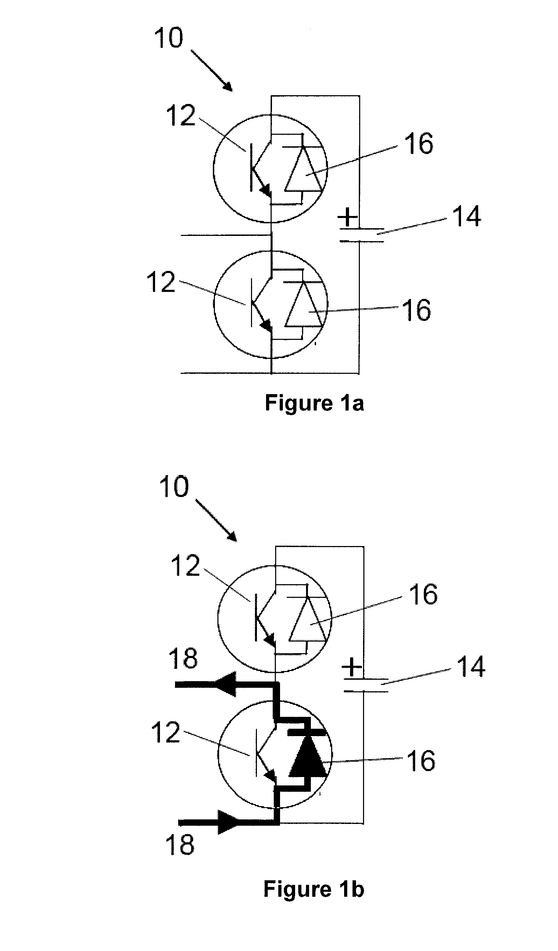

It is known to use a voltage source converter with a multilevel converter arrangement, wherein the known voltage source converter interconnects AC and DC electrical networks. The multilevel converter arrangement includes respective converter bridges of converter cells 10 connected in series. As shown in Figure 1a, each converter cell 10 includes a pair of insulated gate bipolar transistors (IGBT) 12 connected in parallel with a capacitor 14 in a half-bridge arrangement, each IGBT 12 being connected in anti-parallel with a diode 16.

The known voltage source converter is however vulnerable to DC side faults or other abnormal operating conditions that can present a short circuit with low impedance across the DC terminals of the known voltage source converter. Such faults can occur due to damage or breakdown of insulation, lightning strikes, movement of conductors or other accidental bridging between conductors by a foreign object.

The presence of low impedance across the DC terminals of the known voltage source converter can be detrimental to the known voltage source converter because it results in an uncontrolled fault current flowing from the AC electrical network, through the fault and back to the AC electrical network. The configuration of each converter cell 10 means that each converter cell 10 is incapable of blocking the flow of the fault current 18, as shown in Figure 1b. This results in the development of a high fault current exceeding the current rating of the known voltage source converter. Such a high fault current not only damages components of the known voltage source converter, but also results in the known voltage source converter being offline for a period of time. This results in increased cost of repair and maintenance of damaged converter hardware, and inconvenience to end users relying on the working of the known voltage source converter. It is therefore important to be able to reduce or block the uncontrolled fault current as soon as it is detected.

It is known to use a circuit breaker to disconnect a voltage source converter from either or both of the AC and DC electrical networks to prevent the uncontrolled fault current from flowing through the voltage source converter. However, conventional AC circuit breakers have slow response times and thereby are incapable of interrupting the fault current before it rises beyond unacceptable limits, while conventional high-speed DC circuit breakers have insufficient current and voltage ratings to be used in power transmission networks. In addition, after the original fault has been removed, it takes a considerable amount of time to reclose the circuit breaker, thus adding a further delay before normal operation of the voltage source converter can be resumed.

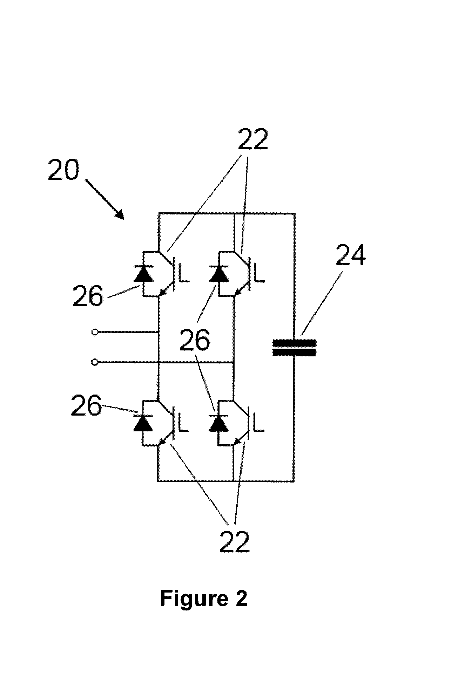

It is also known to use a full-bridge converter cell 20 in place of each converter cell 10 in Figure 1a. Figure 2 shows, in schematic form, the structure of the full-bridge converter cell 20. The full-bridge converter cell 20 includes two pairs of IGBTs 22 connected in parallel with a capacitor 24 in a full-bridge arrangement, each IGBT 22 being connected in anti-parallel with a diode 26. The configuration of the full-bridge converter cell 20 enables the use of its capacitor 24 to provide an opposing voltage to oppose the flow of the uncontrolled fault current. However, the full-bridge converter cell 20 has twice as many IGBTs 22 as each converter cell 10 of Figure 1a, thus adding to the size, weight, cost and conduction losses of the voltage source converter.

According to a first aspect of the invention, there is provided an electrical device comprising: first and second device terminals; and
first and second device terminals;
a first module including first and second module terminals, the first module terminal being connected to the first device terminal, the first module further including a pair of first and second switching blocks connected in parallel with an energy storage device in a half-bridge arrangement such that the first switching block of the first module is connected in parallel with a connection of the second switching block and energy storage device of the first module between the first and second module terminals, the first switching block of the first module including an active switching element connected in anti-parallel with a passive current check element, the passive current check element of the first switching block of the first module defining a unidirectional current path from the second module terminal to the first module terminal; and
first and second current flow control elements,
wherein the first module is connected to the second device terminal by way of the second module terminal being connected to the second device terminal via a first current flow control element, the first current flow control element including an active switching element that is selectively switchable to a current blocking mode to block current from flowing through the first current flow control element when a current flows from the second device terminal to the first device terminal, and
wherein the first module further includes a third module terminal that is defined by a junction between the second switching block and the energy storage device of the first module, the first module being further connected to the second device terminal by way of the third module terminal being connected to the second device terminal only through a second current flow control element, the second current flow control element being a unidirectional current flow control element that includes a passive current check element to direct a current flowing from the second device terminal to the first device terminal to flow through the third module terminal and energy storage device of the first module when the active switching element of the first current flow control element is switched to the current blocking mode.

During normal operation of the electrical device, the active switching element of the first current flow control element is switched to permit current to flow freely between the second device terminal and the second module terminal through the first current flow control element. This enables the first module to selectively provide a voltage source between the first and second device terminals through switching of the first and second switching blocks of the first module to switch the energy storage device into and out of circuit between the first and second module terminals. The provision of such a voltage source facilitates voltage conversion between the first and second device terminals of the electrical device.

A fault or other abnormal operating condition in an electrical network connected to either or both of the first and second device terminals of the electrical device may lead to a high fault current flowing from the second device terminal to the first device terminal.

In the event of the fault current flowing from the second device terminal to the first device terminal, the active switching element of the first current flow control element is switched to the current blocking mode to block current from flowing through the first current flow control element. This prevents the fault current from flowing directly from the second device terminal to the second module terminal via the first current flow control element. At the same time the fault current is directed by the passive current check element of the second current flow control element to flow through the third module terminal and energy storage device of the first module.

The flow of the fault current through the energy storage device of the first module results in the energy storage device of the first module providing an opposing voltage to oppose the flow of the fault current. Depending on the rating of the energy storage device, the provision of the opposing voltage to oppose the flow of the fault current either limits or blocks the flow of the fault current.

The inclusion of the first and second current flow control elements in the electrical device therefore enables the electrical device to reliably limit or block a fault current. In contrast, omission of the first and second current flow control elements from the electrical device results in the problems mentioned above in relation to the conventional converter cell 10 shown in Figure 1a.

In addition the use of the passive current check element of the second current flow control element to direct the flow of the fault current through the energy storage device of the first module enables the energy storage device to absorb any energy stored in the inductance of the associated electrical network and thereby limit any overvoltage resulting from the provision of the opposing voltage to oppose the flow of the fault current. In contrast, although the active switching element of the first current flow control element can be switched to block the fault current from flowing in the first module, omission of the second current flow control element from the electrical device means that additional hardware (such as a snubber circuit) is required to absorb any energy stored in the inductance of the associated electrical network, thus increasing the size, weight and cost of the electrical device.

The configuration of the electrical device according to the invention is advantageous in that the first and second current flow control elements of the electrical device are much smaller than a circuit breaker and in that the electrical device requires less active switching elements than the conventional full-bridge converter cell 20 shown in Figure 1b to carry out its functions of selectively providing a voltage source and limiting or blocking a fault current, thus providing comparative reductions in terms of size, weight, cost and conduction losses.

The configuration of the electrical device according to the invention therefore results in an economical, space-saving electrical device that is capable of not only selectively provide a voltage source to carry out voltage conversion during normal operation but also limiting or blocking a fault current resulting from a fault in the associated electrical network. Moreover the configuration of the electrical device according to the invention is such that the first and second current flow control elements can be added to the converter cell 10 of Figure 1a to provide the converter cell 10 with a fault current limiting or blocking capability without the need for significant modification of the structure and switching control scheme of the converter cell 10.

Furthermore the inclusion of the second current flow control element in the electrical device means that the energy storage device of the first module can be energised by a current flowing from the second device terminal to the first device terminal without having to switch any active switching element of the first module. This is useful when the energy storage device is initially uncharged at the start of a start-up sequence of the electrical device and associated electrical network in which a current from the associated electrical network flows from the second device terminal to the first device terminal. Therefore, the energy storage device of the first module can be used as a power supply unit to drive the active switching elements of the first electrical device. Without the second current flow control unit in the electrical device, it would be necessary to add an additional power supply unit to the electrical device or power the active switching elements from ground level, both of which could add considerable size, weight and cost to the electrical device.

The second switching block of the first module may include an active switching element connected in anti-parallel with a passive current check element, the passive current check element of the second switching block of the first module defining a unidirectional current path from the first module terminal to the third module terminal.

At least one switching block or active switching element may include at least one self-commutated switching device. The or each self-commutated switching device may be an insulated gate bipolar transistor, a gate turn-off thyristor, a field effect transistor, an injection-enhanced gate transistor, an integrated gate commutated thyristor or any other self-commutated switching device. The number of switching devices in each switching block or active switching element may vary depending on the required voltage and current ratings of that switching block or active switching element.

The or each passive current check element may include at least one passive current check device. The or each passive current check device may be any device that is capable of limiting current flow in only one direction, e.g. a diode. The number of passive current check devices in each passive current check element may vary depending on the required voltage and current ratings of that passive current check element.

Each energy storage device may be any device that is capable of storing and releasing energy, e.g. a capacitor, fuel cell or battery.

In embodiments of the invention, the first current flow control element may further include at least one second module, the or each second module including a pair of first and second switching blocks connected in parallel with an energy storage device in a half-bridge arrangement. In such embodiments, the or each second module of the first current flow control element may be connected in series with the active switching element of the first current flow control element.

The configuration of the first current flow control element to include at least one second module not only increases the overall voltage rating of the electrical device but also enables the electrical device to function as a multi-level converter. The configuration of the first current flow control element in this manner is useful when the energy storage device of the first module is sufficient to provide the opposing voltage to oppose the flow of the fault current. This is because such a configuration of the first current flow control element provides savings in terms of hardware size, weight and cost in comparison to a combination of multiple electrical devices to provide a similar voltage rating and multi-level converter functionality, since the combination of multiple electrical devices would have multiple pairs of first and second current flow control elements.

The number of second modules in the first current flow control element may vary to match the voltage requirements of the associated power application.

In further embodiments of the invention, the second current flow control element may further include an energy conversion element. In such embodiments, the energy conversion element of the second current flow control element may be connected in series with the passive current check element of the second current flow control element.

The inclusion of the energy conversion element in the second current flow control element further enhances the ability of the electrical device to limit or control the current flowing through the second current flow control element during, for example, energisation of the energy storage device of the first module or the operation of the electrical device to limit or block a fault current.

The energy conversion element may be any device that is capable of converting an electrical current to any form of non-electrical energy, e.g. a resistive element.

In still further embodiments of the invention, the first current flow control element may further include at least one passive current check element connected in anti-parallel with its active switching element.

The anti-parallel connection of the or each passive current check element and the active switching element in the first current flow control element obviates the need to switch the active switching element of the first current flow control element to allow a current flowing from the first device terminal to the second device to energise the energy storage device of the first module, since the or each passive current check element of the first current flow control element provides a current path through the first current flow control element for the current flowing from the first device terminal to the second device terminal.

The number of passive current check elements in the first current flow control element may vary depending on the required conduction properties of the first current flow control element. For example, the first current flow control element may include two or more passive current check elements in order to reduce conduction losses in the first current flow control element.

The configuration of the or each module may vary to facilitate the operation of the or each module to selectively provide a voltage source. For example, the pair of first and second switching blocks may be connected in parallel with the energy storage device in a half-bridge arrangement to define a 2-quadrant unipolar module that can provide zero or positive voltage and can conduct current in two directions.

According to a second aspect of the invention, there is provided a voltage source converter comprising at least one electrical device according to any embodiment of the first aspect of the invention.

The inclusion of the or each electrical device in the voltage source converter results in an economical, space-saving voltage source converter that is capable of not only selectively carrying out voltage conversion during normal operation but also limiting or blocking a fault current in response to a fault in an associated electrical network.

The number of electrical devices in the voltage source converter may vary depending on the voltage and current requirements of the voltage source converter. For example, the voltage source converter may include a plurality of series-connected electrical devices, wherein each electrical device is in accordance with any embodiment of the first aspect of the invention.

Preferred embodiments of the invention will now be described, by way of non-limiting examples only, with reference to the accompanying drawings in which:
Figure 1a shows, in schematic form, a prior art converter cell;
Figure 1b illustrates, in schematic form, the flow of a fault current in the prior art converter cell of Figure 1a;
Figure 2 shows, in schematic form, a prior art full-bridge converter cell;
Figure 3 shows, in schematic form, a voltage source converter;
Figure 4 shows, in schematic form, an electrical device according to a first embodiment of the invention;
Figure 5a and 5b illustrate, in schematic form, the operation of the electrical device during the flow of a fault current in the voltage source converter of Figure 3;
Figure 6 illustrates, in schematic form, the operation of the electrical device during a start-up sequence of the voltage source converter of Figure 3;
Figure 7 shows, in schematic form, an alternative electrical device in which a second current flow control element is omitted;
Figure 8 shows, in schematic form, an electrical device according to a third embodiment of the invention;
Figure 9 shows, in schematic form, an electrical device according to a third embodiment of the invention; and
Figure 10 shows, in schematic form, an electrical device according to a fourth embodiment of the invention.

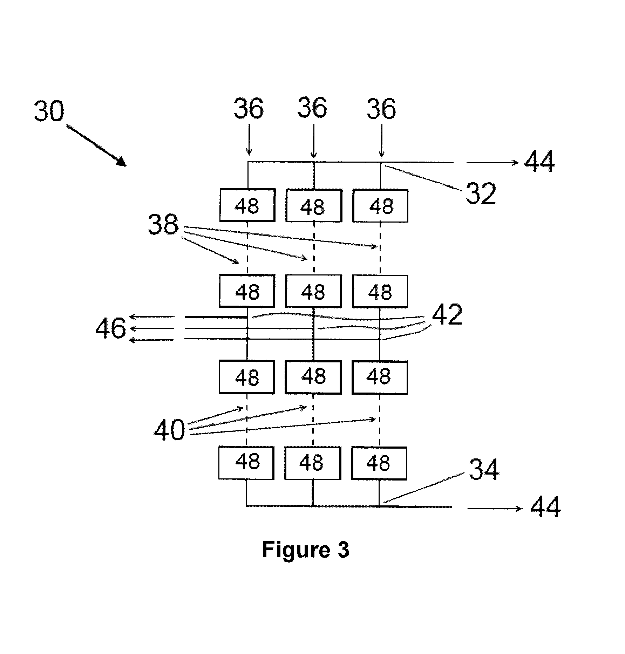

A voltage source converter 30 is shown in Figure 3. The voltage source converter 30 includes first and second DC terminals 32,34 and three converter limbs 36. Each converter limb 36 extends between the first and second DC terminals 32,34 and has first and second limb portions 38,40 separated by an AC terminal 42. In particular, in each converter limb 36, the first limb portion 38 is connected between the first DC terminal 32 and the AC terminal 42, and the second limb portion 40 is connected between the second DC terminal 34 and the AC terminal 42.

In use, the first and second DC terminals 32,34 of the voltage source converter 30 are respectively connected to first and second terminals of a DC electrical network 44, the first terminal carrying a positive DC voltage and the second terminal carrying a negative DC voltage, while the AC terminal 42 of each converter limb 36 is connected to a respective phase of a three-phase AC electrical network 46.

Each limb portion 38,40 includes a plurality of series-connected first electrical devices 48.

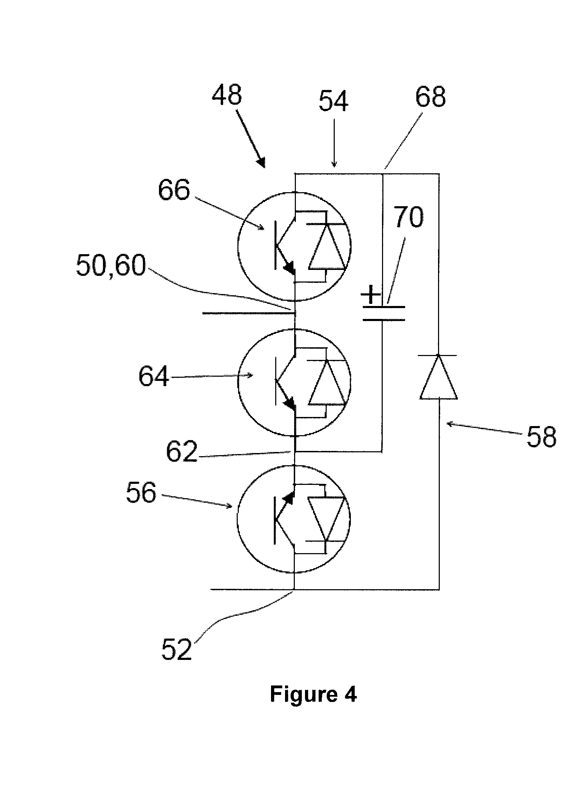

A first electrical device 48 according to a first embodiment of the invention is shown in Figure 4.

Each first electrical device 48 includes first and second device terminals 50,52, a first module 54 and first and second current flow control elements 56,58.

Each first electrical device 48 of the first limb portion 38 is connected in the first limb portion 38 such that a current flows from the second device terminal 52 to the first device terminal 50 when a current flows from the AC terminal 42 to the first DC terminal 32 and such that a current flows from the first device terminal 50 to the second device terminal 52 when a current flows from the first DC terminal 32 to the AC terminal 42.

Each first electrical device 48 of the second limb portion 40 is connected in the second limb portion 40 such that a current flows from the second device terminal 52 to the first device terminal 50 when a current flows from the second DC terminal 34 to the AC terminal 42 and such that a current flows from the first device terminal 50 to the second device terminal 52 when a current flows from the AC terminal 42 to the second DC terminal 34.

The first module 54 includes first and second module terminals 60,62. In the embodiment shown, the first module terminal 60 is the same as the first device terminal 50.

The first module 54 further includes a pair of first and second switching blocks 64,66 connected in parallel with an energy storage device in a half-bridge arrangement. In this manner the first switching block 64 of the first module 54 is connected in parallel with a connection of the second switching block 66 and energy storage device of the first module 54 between the first and second module terminals 60,62.

The first module 54 further includes a third module terminal 68. The third module terminal 68 is defined by a junction between the second switching block 66 and the energy storage device of the first module 54.

Each of the first and second switching blocks 64,66 of the first module 54 includes an active switching element connected in anti-parallel with a passive current check element. The passive current check element of the first switching block 64 of the first module 54 defines a unidirectional current path from the second module terminal 62 to the first module terminal 60, while the passive current check element of the second switching block 66 of the first module 54 defines a unidirectional current path from the first module terminal 60 to the third module terminal 68.

The first module 54 is connected to the second device terminal 52 by way of the second module terminal 62 being connected to the second device terminal 52 via the first current flow control element 56. The first current flow control element 56 includes an active switching element that is connected in anti-parallel with a passive current check element.

The first module 54 is further connected to the second device terminal 52 by way of the third module terminal 68 being connected to the second device terminal 52 only through the second current flow control element 58. The second current flow control element 58 is a unidirectional current flow control element that includes a passive current check element.

Each active switching element includes a single active switching device. Each active switching device is in the form of an insulated gate bipolar transistor (IGBT). It is envisaged that, in other embodiments of the invention, each IGBT may be replaced by a gate turn-off thyristor, a field effect transistor, an injection-enhanced gate transistor, an integrated gate commutated thyristor or any other self-commutated switching device. The number of active switching devices in each active switching element may vary depending on the required voltage and current ratings of that active switching element.

Each passive current check element includes a passive current check device in the form of a diode. It is envisaged that, in other embodiments, each diode may be replaced by any other device that is capable of limiting current flow in only one direction. The number of passive current check devices in each passive current check element may vary depending on the required voltage rating of that passive current check element.

Each energy storage device is in the form of a capacitor 70. It is further envisaged that, in other embodiments of the invention, each capacitor 70 may be replaced by another type of energy storage device that is capable of storing and releasing energy, e.g. a fuel cell or battery.

In each limb portion 38,40, the plurality of series-connected first electrical devices 48 defines a chain-link converter, and the operation of each first module 54 in each chain-link converter is described as follows.

The capacitor 70 of the first module 54 is selectively bypassed or inserted into the chain-link converter by changing the states of the IGBTs of the first and second switching blocks 64,66. This selectively directs current through the capacitor 70 or causes current to bypass the capacitor 70, so that the module provides a negative, zero or positive voltage.

The capacitor 70 of the first module 54 is bypassed when the IGBTs of the first and second switching blocks 64,66 in the first module 54 are configured so that the first switching block 64 forms a short circuit in the first module 54 that bypasses the capacitor 70. For example, when the current in the chain-link converter flows from the first module terminal 60 to the second module terminal 62, the IGBT of the first switching block 64 is switched on and the IGBT of the second switching block 66 is switched off so that the first switching block 64 forms the short circuit in the first module 54 that bypasses the capacitor 70. This causes current in the chain-link converter to pass through the short circuit and bypass the capacitor 70, and so the module provides a zero voltage, i.e. the first module 54 is configured in a bypassed mode.

The capacitor 70 of the first module 54 is inserted into the chain-link converter when the IGBTs of the first and second switching blocks 64,66 in the first module 54 are configured to allow the current in the chain-link converter to flow into and out of the capacitor 70. For example, when the current in the chain-link converter flows from the first module terminal 60 to the second module terminal 62, the IGBT of the first switching block 64 is switched off and the IGBT of the second switching block 66 is switched on to allow the current in the chain-link converter to flow into and out of the capacitor 70. The capacitor 70 then charges or discharges its stored energy so as to provide a non-zero voltage, i.e. the first module 54 is configured in a non-bypassed mode.

In this manner the first and second switching blocks 64,66 are connected in parallel with the capacitor 70 in a half-bridge arrangement to define a 2-quadrant unipolar module that can provide, zero or positive voltage and can conduct current in two directions, and so each first electrical device 48 is capable of selectively providing a voltage source.

It is possible to build up a combined voltage across the chain-link converter, which is higher than the voltage available from each of its individual first modules 54 via the insertion of the capacitors 70 of multiple first modules 54, each providing its own voltage, into the chain-link converter. In this manner switching of the IGBTs in each first module 54 causes the chain-link converter to provide a stepped variable voltage source, which permits the generation of a voltage waveform across the chain-link converter using a step-wise approximation. As such the chain-link converter is capable of providing a wide range of complex voltage waveforms.

In use, during normal operation of the AC and DC electrical networks 46,44, each of the first modules 54 of the first and second limb portions 38,40 are controllable to control the configuration of an AC voltage at each AC terminal 42 to facilitate voltage conversion between the AC and DC electrical networks 46,44. The configuration of the AC voltage at each AC terminal 42 is controlled by combining first and second AC voltage components as follows.

To construct the first AC voltage component, the IGBTs of the first and second switching blocks 64,66 of each first module 54 in the first limb portion 38 are switched to enable the first limb portion 38 to provide a variable voltage to subtract voltage steps, i.e. "pull down", the positive DC voltage at the first DC terminal 32. Meanwhile the IGBTs of the first and second switching blocks 64,66 of each first module 54 in the second limb portion 40 are switched to enable the second limb portion 40 to provide a voltage that offsets the negative DC voltage at the second DC terminal 34 so that there is no flow of current in the second limb portion 40.

To construct the second AC voltage component, the IGBTs of the first and second switching blocks 64,66 of each first module 54 in the second limb portion 40 are switched to enable the second limb portion 40 to provide a variable voltage to subtract voltage steps, i.e. "pull down", the negative DC voltage at the second DC terminal 34. Meanwhile the IGBTs of the first and second switching blocks 64,66 of each first module 54 in the first limb portion 38 are switched to enable the first limb portion 38 to provide a voltage that offsets the positive DC voltage at the first DC terminal 32 so that there is no flow of current in the first limb portion 38.

During the normal operation of the AC and DC electrical networks 46,44, the IGBT of the first current flow control element 56 of each first electrical device 48 in the first and second limb portions 38,40 is switched to switch the first current flow control element 56 to a current conducting mode to permit current to flow freely between the second device terminal 52 and the second module terminal 62 through the first current flow control element 56.

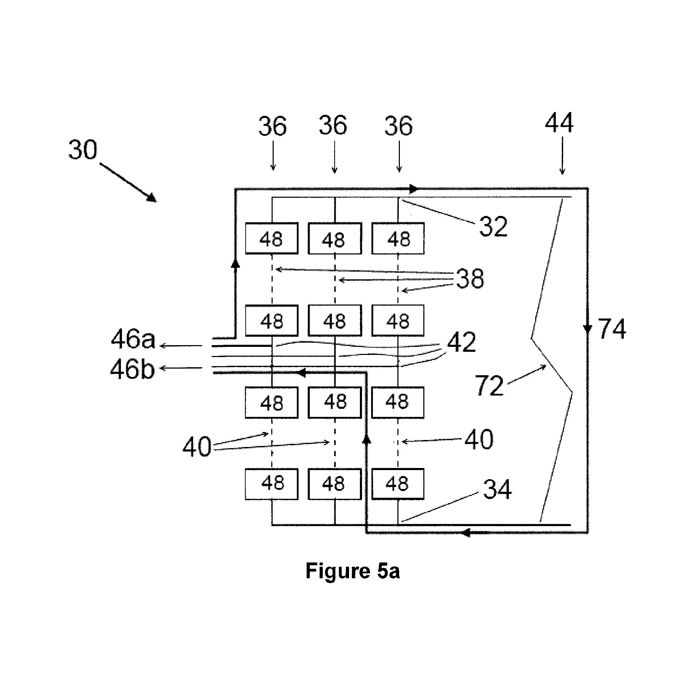

A fault 72 or other abnormal operating condition in the DC electrical network 44 may lead to a high fault current 74 that flows from a phase 46a of the AC electrical network 46, through the first limb portion 38 of a first converter limb 36, through the fault 72 in the DC electrical network 44, through the second limb portion 40 of a second converter limb 36 and to another phase 46b of the AC electrical network 46, as shown in Figure 5a.

The flow of the fault current 74 in the voltage source converter 30 in the above manner means that the fault current 74 flows through the first electrical devices 48 of the first limb portion 38 of the first converter limb 36 and through the first electrical devices 48 of the second limb portion 40 of the second converter limb 36. The arrangement of the first electrical devices 48 in the first and second limb portions 38,40 means that, when the fault current 74 flows in a first electrical device 48, the fault current 74 flows from the second device terminal 52 to the first device terminal 50.

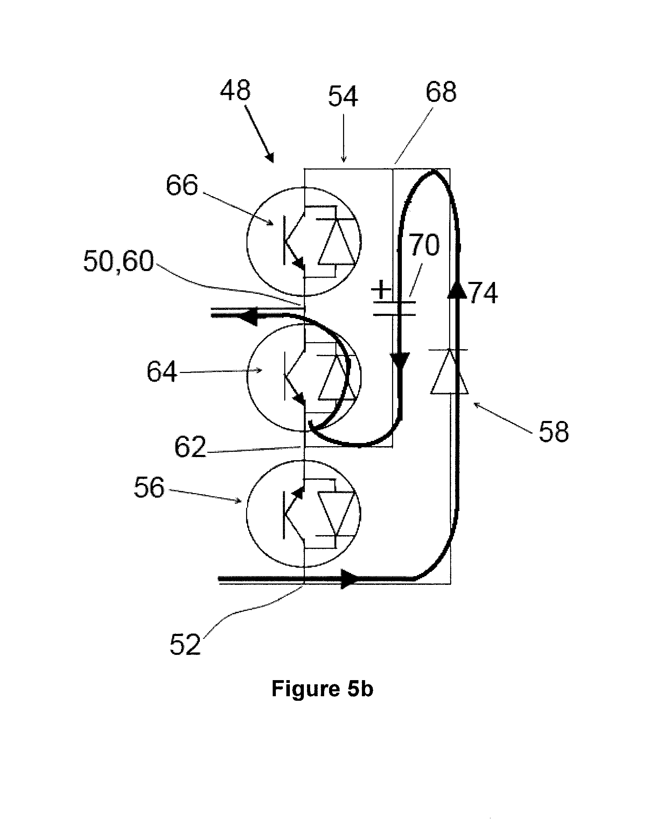

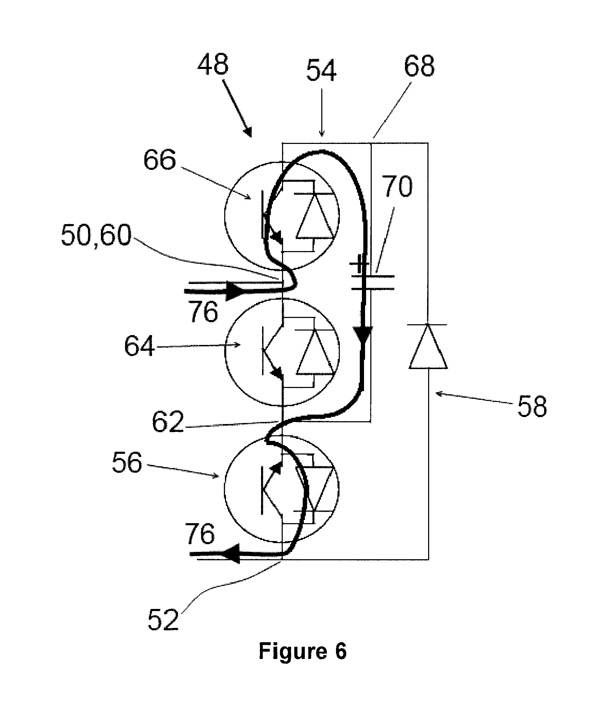

Operation of a first electrical device 48 to limit or block the fault current 74 is described as follows with reference to Figures 5b and 6.

In the event of the fault current 74 flowing from the second device terminal 52 to the first device terminal 50, the IGBT of the first current flow control element 56 is switched to switch the first current flow control element 56 to a current blocking mode to block current from flowing through the first current flow control element 56. This prevents the fault current 74 from flowing directly from the second device terminal 52 to the second module terminal 62 via the first current flow control element 56. At the same time the fault current 74 is directed by the diode of the second current flow control element 58 to flow through the third module terminal 68 and capacitor 70 of the first module 54, as illustrated in Figure 5b which shows the current path followed by the fault current 74.

The flow of the fault current 74 through the capacitor 70 of the first module 54 results in the capacitor 70 of the first module 54 providing an opposing voltage to oppose the flow of the fault current 74 through the first electrical device 48. The capacitor 70 of the first module 54 of each first electrical device 48 in the voltage source converter 30 is rated so that the voltage source converter 30 is able to provide a combined opposing voltage that equals or exceeds the phase-to-phase AC voltage of the AC electrical network 46 so as to limit and eventually block the flow of the fault current 74.

The inclusion of the first and second current flow control elements 56,58 in each first electrical device 48 of the voltage source converter 30 therefore enables the voltage source converter 30 to reliably limit or block a fault current 74. In contrast, omission of the first and second current flow control elements 56,58 from each first electrical device 48 results in the problems mentioned above in relation to the conventional converter cell 10 shown in Figure 1a.

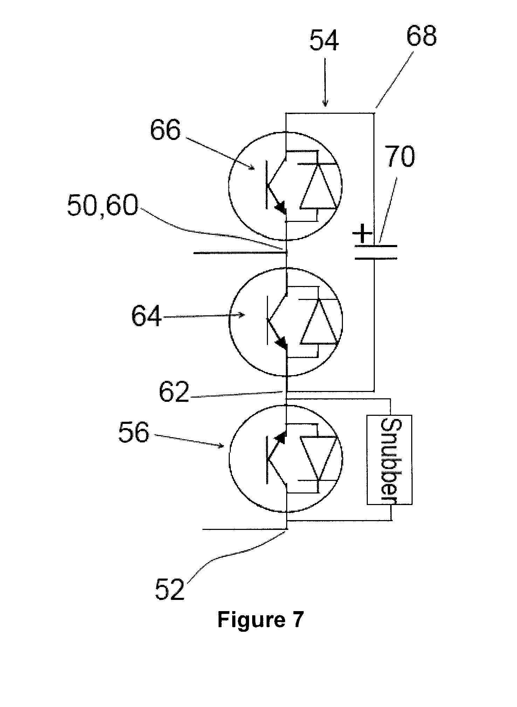

In addition the use of the diode of the second current flow control element 58 to direct the flow of the fault current 74 through the capacitor 70 of the corresponding first module 54 enables that capacitor 70 to absorb any energy stored in the inductance of the AC and DC electrical networks 46,44 and thereby limit any overvoltage resulting from the provision of the opposing voltage to oppose the flow of the fault current 74. In contrast, although the IGBT of the first current flow control element 56 of a first electrical device 48 can be switched to switch the first current flow control element 56 to a current blocking mode to block the fault current 74 from flowing in the corresponding first module 54, omission of the second current flow control element 58 from the first electrical device 48, as shown in Figure 7, means that additional hardware (such as a snubber circuit) is required to absorb any energy stored in the inductance of the AC and DC electrical networks 46,44, thus increasing the size, weight and cost of each first electrical device 48.

The configuration of each first electrical device 48 is advantageous in that the first and second current flow control elements 56,58 of each first electrical device 48 are much smaller than a circuit breaker and in that each first electrical device 48 requires less IGBTs than the conventional full-bridge converter cell 20 shown in Figure 1b to carry out its functions of selectively providing a voltage source and limiting or blocking a fault current 74, thus providing comparative reductions in terms of size, weight, cost and conduction losses.

The configuration of each first electrical device 48 therefore results in an economical, space-saving voltage source converter 30 that is capable of not only selectively carrying out voltage conversion during normal operation of the AC and DC electrical networks 46,44 but also limiting or blocking a fault current 74 resulting from a fault 72 in the DC electrical network 44. Moreover the configuration of each first electrical device 48 is such that the first and second current flow control elements 56,58 can be added to the converter cell 10 of Figure 1a to provide the converter cell 10 with a fault current 74 limiting or blocking capability without the need for significant modification of the structure and switching control scheme of the converter cell 10.

Furthermore the inclusion of the second current flow control element 58 in each first electrical device 48 means that the capacitor 70 of the corresponding first module 54 can be energised by a current flowing from the second device terminal 52 to the first device terminal 50 without having to switch any IGBT of the first module 54, whereby the current flowing from the second device terminal 52 to the first device terminal 50 follows a current path that is identical to the current path followed by the fault current 74 shown in Figure 5b. This is useful when the capacitor 70 is initially uncharged at the start of a start-up sequence of the voltage source converter 30 and AC and DC electrical networks 46,44 in which a current from the AC electrical network 46 flows from the second device terminal 52 to the first device terminal 50 in each first electrical device 48. Therefore, in each first electrical device 48, the capacitor 70 of the first module 54 can be used as a power supply unit to drive the IGBTs. Without the second current flow control unit in each first electrical device 48, it would be necessary to add an additional power supply unit to each first electrical device 48 or power the IGBTs of each first electrical device 48 from ground level, both of which could add considerable size, weight and cost to the voltage source converter 30.

Also, in each first electrical device 48, the anti-parallel connection of the diode and the IGBT in the first current flow control element 56 obviates the need to switch the IGBT of the first current flow control element 56 to allow a current 76 from the DC electrical network 44 that flows from the first device terminal 50 to the second device to energise the capacitor 70 of the first module 54, since the diode of the first current flow control element 56 provides a current path through the first current flow control element 56 for the current flowing from the first device terminal 50 to the second device terminal 52, as shown in Figure 6.

At least one of the first electrical devices 48 in the voltage source converter 30 of Figure 3 may be replaced by each of the following electrical devices 148,248,348 according to embodiments of the invention.

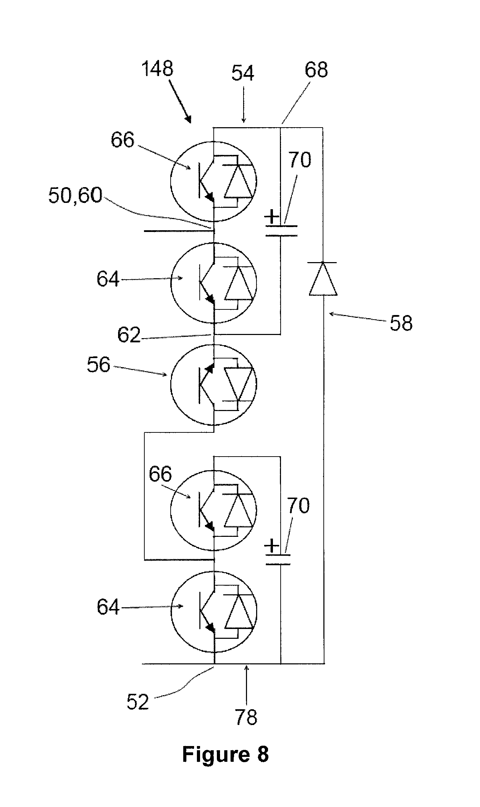

A second electrical device according to a second embodiment of the invention is shown in Figure 8. The second electrical device 148 of Figure 8 is similar in structure and operation to the first electrical device 48 of Figure 3, and like features share the same reference numerals.

The second electrical device 148 differs from the first electrical device 48 in that the first current flow control element 56 of the second electrical device 148 further includes a second module 78. The second module 78 is connected in series with the first current flow control element 56. The second module 78 is similar in structure and operation to the first module 54, and like features share the same reference numerals.

The configuration of the first current flow control element 56 to include the second module 78 not only means that the voltage rating of each second electrical device 148 is equivalent to two first electrical devices 48, but also enables each second electrical device 148 to function as a multi-level converter that is equivalent to a combination of two first electrical devices 48, it is possible to replace every two first electrical devices 48 with a second electrical device 148 without adversely affecting the voltage conversion capability of the voltage source converter 30.

In addition, since the voltage source converter 30 is only required at the very minimum to provide a combined opposing voltage that equals the phase-to-phase AC voltage of the AC electrical network 46 and the combined opposing voltage can be provided by the combination of a first limb portion 38 of a first converter limb 36 and a second limb portion 40 of a second converter limb 36, it is possible to halve the number of first modules 54 in each limb portion 38,40 by replacing every two first electrical devices 48 with a second electrical device 148 without adversely affecting the fault current 74 limiting or blocking capabilities of the voltage source converter 30.

Such a configuration of the first current flow control element 56 in the second electrical device 148 provides savings in terms of hardware size, weight and cost of the voltage source converter 30, since two first electrical devices 48 together have two pairs of first and second current flow control elements 56,58 whilst the second electrical device148 only has one pair of first and second current flow control elements 56,58.

It is envisaged that, in other embodiments of the invention, the number of second modules in the first current flow control element of the second electrical device may vary to match the voltage requirements of the associated power application.

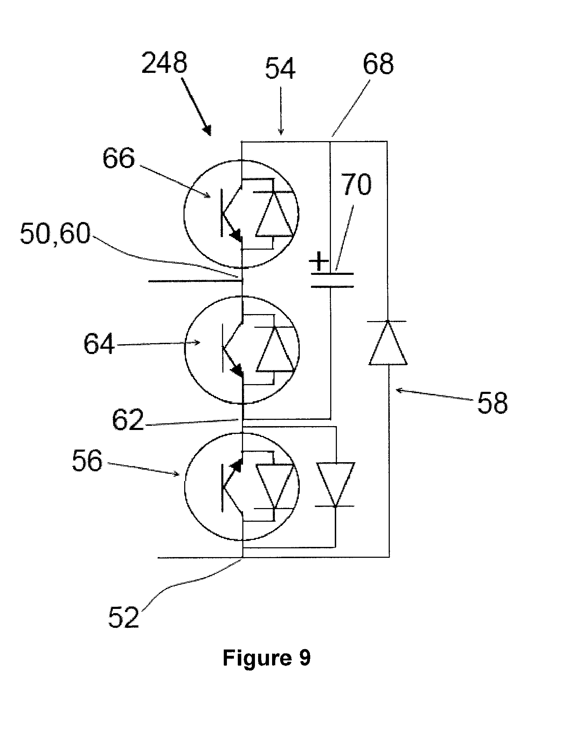

A third electrical device 248 according to a third embodiment of the invention is shown in Figure 9. The third electrical device 248 of Figure 9 is similar in structure and operation to the first electrical device 48 of Figure 4, and like features share the same reference numerals.

The third electrical device 248 differs from the first electrical device 48 in that the first current flow control element 56 of the third electrical device 248 includes two diodes connected in anti-parallel with its IGBT. The inclusion of two diodes, instead of one diode, in the first current flow control element 56 further reduces conduction losses in the first current flow control element 56.

It is envisaged that, in other embodiments of the invention, the number of diodes in the first current flow control element of the third electrical device may vary depending on the required conduction properties of the first current flow control element.

It is also envisaged that, in other embodiments of the invention, the first current flow control element of the second electrical device may include two or more diodes connected in anti-parallel with its IGBT.

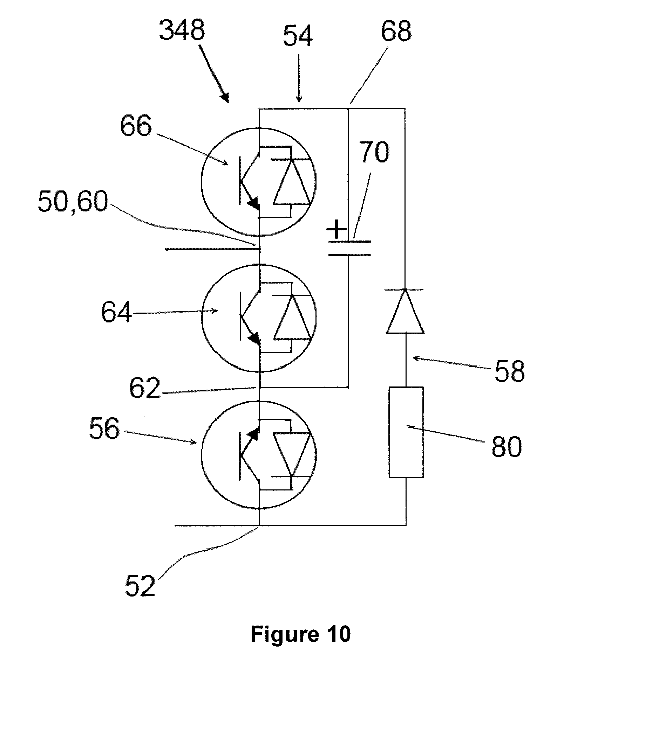

A fourth electrical device 348 according to a fourth embodiment of the invention is shown in Figure 10. The fourth electrical device 348 of Figure 10 is similar in structure and operation to the first electrical device 48 of Figure 4, and like features share the same reference numerals.

The fourth electrical device 348 differs from the first electrical device 48 in that the second current flow control element 58 of the fourth electrical device 348 further includes an energy conversion element in the form of a resistor 80. The resistor 80 is connected in series with the diode of the second current flow control element 58.

The inclusion of the resistor 80 in the second current flow control element 58 further enhances the ability of the fourth electrical device 348 to limit or control the current flowing through the second current flow control element 58 during, for example, energisation of the capacitor 70 of the first module 54 or the operation of the fourth electrical device 348 to limit or block a fault current 74.

It is envisaged that, in other embodiments of the invention, the resistor may be replaced by any other energy conversion element that is capable of converting an electrical current to any form of non-electrical energy, e.g. a resistive element.

It is also envisaged that, in other embodiments of the invention, the second current flow control element of the second or third electrical device may further include an energy conversion element, which is preferably connected in series with the diode of the second current flow control element.

It is further envisaged that, in other embodiments of the invention, each of the first, second, third and fourth electrical devices 48,148,248,348 may be used as a stand-alone electrical device or as a component of a voltage source converter with a different topology from the voltage source converter 30 of Figure 3.

## Claims

1. An electrical device comprising:
first and second device terminals;
a first module including first and second module terminals, the first module terminal being connected to the first device terminal, the first module further including a pair of first and second switching blocks connected in parallel with an energy storage device in a half-bridge arrangement such that the first switching block of the first module is connected in parallel with a connection of the second switching block and energy storage device of the first module between the first and second module terminals, the first switching block of the first module including an active switching element connected in anti-parallel with a passive current check element, the passive current check element of the first switching block of the first module defining a unidirectional current path from the second module terminal to the first module terminal; and
first and second current flow control elements,
wherein the first module is connected to the second device terminal by way of the second module terminal being connected to the second device terminal via a first current flow control element, the first current flow control element including an active switching element that is selectively switchable to a current blocking mode to block current from flowing through the first current flow control element when a current flows from the second device terminal to the first device terminal, and
wherein the first module further includes a third module terminal that is defined by a junction between the second switching block and the energy storage device of the first module, the first module being further connected to the second device terminal by way of the third module terminal being connected to the second device terminal only through a second current flow control element, the second current flow control element being a unidirectional current flow control element that includes a passive current check element to direct a current flowing from the second device terminal to the first device terminal to flow through the third module terminal and energy storage device of the first module when the active switching element of the first current flow control element is switched to the current blocking mode.

2. An electrical device according to Claim 1 wherein the second switching block of the first module includes an active switching element connected in anti-parallel with a passive current check element, the passive current check element of the second switching block of the first module defining a unidirectional current path from the first module terminal to the third module terminal.

3. An electrical device according to Claim 1 or Claim 2 wherein the first current flow control element further includes at least one second module, the or each second module including a pair of first and second switching blocks connected in parallel with an energy storage device in a half-bridge arrangement.

4. An electrical device according to Claim 3 wherein the or each second module of the first current flow control element is connected in series with the active switching element of the first current flow control element.

5. An electrical device according to any preceding claim wherein the second current flow control element further includes an energy conversion element.

6. An electrical device according to Claim 5 wherein the energy conversion element of the second current flow control element is connected in series with the passive current check element of the second current flow control element.

7. An electrical device according to any preceding claim wherein the first current flow control element further includes at least one passive current check element connected in anti-parallel with its active switching element.

8. An electrical device according to any preceding claim wherein the pair of first and second switching blocks are connected in parallel with the energy storage device in a half-bridge arrangement to define a 2-quadrant unipolar module that can provide zero or positive voltage and can conduct current in two directions.

9. A voltage source converter comprising at least one electrical device according to any preceding claim.

10. A voltage source converter according to Claim 9 including a plurality of series-connected electrical devices, wherein each electrical device is in accordance with any of Claims 1 to 8.
